(19) Europäisches Patentamt
European Patent Office
Office européen des brevets

(11) Publication number: **0 299 124 A2**

(12) **EUROPEAN PATENT APPLICATION**

(21) Application number: **87308267.1**

(51) Int. Cl.⁴: **B65D 75/32**

(22) Date of filing: **18.09.87**

(30) Priority: **17.07.87 CA 542347**

(43) Date of publication of application:
**18.01.89 Bulletin 89/03**

(84) Designated Contracting States:
**AT BE CH DE ES FR GB GR IT LI LU NL SE**

(71) Applicant: **TWINPAK INC.**
**2225 Hymus Boulevard**
**Dorval Quebec H9P 1J8(CA)**

(72) Inventor: **Mancini, Derek Vincent**
**R.R. No 1**
**Uxbridge Ontario L0C 1KO(CA)**

(74) Representative: **Geldard, David Guthrie et al**
**URQUHART-DYKES AND LORD Tower House**
**Merrion Way**
**Leeds West Yorkshire LS2 8PA(GB)**

(54) **Package, packing machine and method.**

(57) A disposable container suitable for retaining liquids comprises two opposed container sections, each having a peripheral ring-like flange about a recess with the flanges being sealed therebetween. The recesses of the opposed container sections define a common central cavity and the flanges include a throat opening into said cavity through which product within the cavity can be dispensed. The throat is at least partially defined by the opposed container flanges and each container section is of a thermoformable plastic material. These container sections are originally formed from flat strip packaging material having diecut side edges with the strip defining individual container body sections. A tapered neck portion of each body section accommodates dispensing of the contents and preferably a hot melt adhesive secures the opposed container sections. The plastic containers are formed by intermittently advancing, in timed sequence, two strips through separate thermoforming operations where each strip is shaped to form a series of half containers and thereafter the strips are married and secured for subsequent operations. The invention also includes an apparatus and process for forming, filling and sealing the containers by advancing the packaging material through a number of stations along a predetermined path. The formed container is shaped to reduce inadvertent tipping thereof when supported in a free-standing disposition.

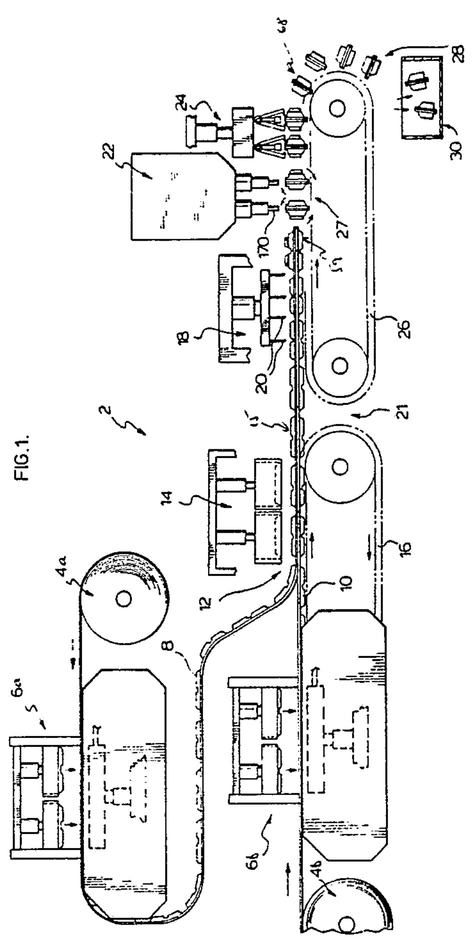

FIG.1.

EP 0 299 124 A2

# PACKAGE, PACKING MACHINE AND METHOD

The present invention relates to apparatus for the packaging of liquid like products in individual containers. The invention particularly relates to an apparatus and method adapted to form, fill and seal a plastic container. This method and apparatus has particular application for the forming, filling and sealing of small containers for dairy products such as cream, i.e., so-called creamers, and for condiments, where the container is preferably sized for a single serving.

Apparatus for forming, filling and sealing of creamers is known and has a number of advantages over the pre-formed creamer containers which are subsequently used in a filling and sealing machine. The container forming operation suitable for the forming of plastic containers is normally accomplished by heating of a flat substrate in preparation for an extruding or shaping step. This heating operation acts to partially disinfect or sterilize what will become the interior of the container. Form fill seal machines are also advantageous in that the supply stock, namely flat plastic discs, sheeting, strip material of plastic or foil paper laminate and the like are easily stored. The main advantage with a form, fill and seal machine is the reduced overall production cost for the operator as the container is formed in the filling apparatus and is made from relatively low cost material which may or may not be pre-cut by a diecutting operation. In most cases, the forming material is pre-printed and little additional labelling is required.

The packaging for creamers has been generally confined to small frusto conical containers which have a flat lid of a paper foil laminate heat sealed to the periphery of a relatively large opening. The volume of the container is quite small and the normal practice is to fill the container with 11 to 18.5 cc of product. Numerous approaches have been taken with respect to filling of these containers, as generally the filling step determines the maximum output of the machine. In known filling machines, preformed open top containers are moved along a predetermined path past a filling operation and subsequently advanced through a heat sealing operation where a suitable lid is aligned with and heat sealed to the container. In some cases, the apparatus will have a conveyor driven intermittently, with various stations along the length of the conveyor which operate when the conveyor is stationary; or in other cases, the containers are continuously advanced and the various operations are carried out as the containers are advanced. In designing machines of either type described above, high output is difficult due to time required for filling and sealing of the containers. The conventional containers have a wide opening relative to their depth, and product splash can contaminate the generally flat flange area at the open top of the containers which is used for heat sealing the lid material to the container. Typically, the paper foil laminate has a thermally activated adhesive film on the lower surface to effect a seal between the lid and the container flange.

The present invention, in its various aspects, provides a form, fill and seal apparatus and method, suitable for the packaging of cream as well as other liquid like products including condiments, as well as a container made by the apparatus and a method and a blank used in the manufacture of the container. The apparatus and method allow the forming, filling and sealing of a container made from a previously diecut formable strip material such as plastic or foil. This method and apparatus in most cases reduces the unit cost to the operator, such as a dairy, for filling of a container as the need for previously formed containers is eliminated. The container can generally be filled at a faster rate due to its generally closed configuration and is of a particular shape to render the container more stable in a free-standing disposition.

According to a first aspect of the invention a disposable container of predetermined shape suitable for retaining liquids comprises two opposed container sections, each having a peripheral flange about a recess with said flanges being secured and sealed therebetween, said recesses collectively defining a common central cavity of said container and said flanges including a throat opening into said cavity, said throat being at least partially defined by said opposed flanges and passing therebetween, each container section being of a similar thermoformable plastic material.

Preferably said throat is sealed at an end thereof remote from said cavity and said container retains a liquid product therewithin. Desirably said flanges in the area defining the throat include a weakened area at one side of said throat for tearing of said container sections in a direction across said throat and across said sealed flanges to facilitate dispensing of said liquid product. The weakened area may be notch means in said throat, such that said plastic material may be torn across said throat intermediate the sealed end of said throat and said cavity. The throat is conveniently sealed at said end thereof remote from said cavity by portions of said flanges which are melted together.

Alternatively, or in addition, a hot melt adhesive seals the end of said throat and seals and secures said flanges.

Desirably said container sections are at least essentially identical and each includes a pair of flat generally circular label areas, in opposed spaced apart relationship defining opposite sides of said central cavity and being generally parallel with said opposed flanges, said label areas additionally defining support surfaces for free-standing disposition of said container.

The container is desirably elongate and shallow with said throat extending in the length of said container laterally of said free-standing disposition.

According to a second aspect of the invention we provide a strip of packaging material having diecut side edges and including individual container body sections joined by neck portions, said strip comprising a plastic thermoformable sheet which on one side thereof includes a thermally activated suitable adhesive at least essentially about the perimeter of each container body section.

The adhesive is desirably confined to the perimeter area of each container body section.

Preferably immediately adjacent container body sections are symmetrically disposed about a line in the plane of and passing between said immediately adjacent container body sections.

According to a third aspect of the invention we provide a strip of thermoformed plastic container sections joined in series, each container section having a flat generally planar peripheral flange area surrounding an outer edge of a wide generally central recess opening, said flange being interrupted by a sunken neck portion which connects with a neck portion of an adjacent container section; each flange including hot melt adhesive on an outwardly facing flange area.

Preferably the central recess of each container section includes a generally flat panel, said panel being spaced from said outer edge.

The depth of each recess is desirably less than a sixth of the maximum width of the recess.

Adjacent container sections of the strip are desirably orientated in directly opposite directions.

The neck portions are preferably of lesser width than the recesses and present recessed areas for driving of said strip and from which registration of position can be determined.

According to a fourth aspect of the invention a method of forming a plastic container of fixed shape comprises: intermittently advancing two flat strips of plastic thermoformable material through separate thermoforming operations; shaping each strip in a thermoforming operation to form a series of connected half containers in a strip, with each half container having a recess therein generally surrounded by a flange and a necked area across said flange accessing the recess, said flange including a thermally activated adhesive thereon; cooling said flange about each half container during the thermoforming operation to an extent sufficient to essentially maintain said hot melt adhesive on said flanges unactivated during the thermoforming operation; aligning said strips of half containers in an opposed manner to create a series of container portions, each container portion being defined by a pair of aligned half containers in which the respective recesses collectively define a common central cavity with the respective aligned neck areas defining a narrow throat for filling of the cavity; sealing said aligned strips of half containers by applying sufficient heat to activate the adhesive on said flanges while maintaining the narrow throat open and maintaining said flanges below their thermal activation temperature during a dwell time between advances of said strips to thereby form a strip of said container portions; retaining each container portion within a conveyor for separating and filling; separating individual containers from the strip of container portions and filling the individual containers with a fluid-like product during the dwell time; sealing the throat of each filled container; releasing the retained sealed containers; and removing the sealed containers from the conveyor.

Desirably the individual containers are separated by cutting and are rotated in preparation for said filling to orientate each container so that the throat is in a position above the central cavity.

Preferably the strips of material are each intermittently advanced in units of two half containers, one unit following the other unit, and each operation is carried out on one unit of each strip material. Each operation may be carried out in a dwell time of less than about 4 seconds.

Conveniently the throat of each container is sealed by melting the edges of the plastic strip material at the throat mouth remote from said cavity by means of a heated form being brought into contact with the edges of the plastic strip, melting the edges effecting a seal therebetween and forming a bead of plastic material closing said mouth.

The method desirably includes clamping said throat to close the same after filling and retaining the throat clamped during the subsequent sealing thereof.

Preferably each strip is first intermittently advanced through separate forming stations by separate conveyors and the alignment of said strips is completed in combination with one of the conveyors whereafter the half containers are sealed.

Desirably the strip of container portions is transported to a third conveyor, said third conveyor advancing the series of container portions and containers through separating, filling and final sealing stations. All conveyors are preferably synchronized.

During sealing of said strips of half containers, it is preferred that heat is applied to a flange of only one of said strips of half containers. Desirably cooling of the recesses adjacent the heated flange of said one strip of half containers is also provided.

According to a fifth aspect of the invention a packaging machine for the forming, filling and sealing of a container comprises: two separate forming conveyors each advancing thermoformable plastic strip material through separate forming operations; means for bringing the output of one of said forming conveyors into appropriate registration at a registration point and in timed sequence with the output of the other of said forming conveyors, such that the outputs define opposed container sections produced during the thermoforming operations; container sealing means for sealing the strips of container sections to provide a strip of container portions, each container portion having a throat portion; a further conveyor for receiving the sealed strip of container portions, said further conveyor having means to engage each container portion and retain the same in a conveyor plate; separating, filling and sealing stations associated with said further conveyor for first separating said container portions from said strips as discrete containers open at said throat portion, filling said discrete containers and sealing said filled containers; and means associated with said further conveyor for discharging the sealed filled containers.

Preferably said sealing station is adapted to ultrasonically weld the aligned container sections to one another.

Desirably the conveyors are adapted to intermittently advance the strip material, formed strips and discrete containers through the various stations for carrying out the operations at said stations when the conveyors are stationary.

The apparatus may be a multi-lane apparatus for completing the same operations in each lane of the apparatus.

Preferably said further conveyor includes conveyor plates which are rotatable for orientating the containers for filling.

The apparatus may be adapted to produce two containers with each movement of the conveyors.

Conveniently said conveyor plates are adapted to engage about the periphery of a strip of diecut material and retain a container when orientated for filling.

Each conveyor plate may have an under-cut region for providing a snap fit with the forming material.

The conveyors are desirably driven in timed sequence with each other.

According to a sixth aspect of the invention apparatus for the forming, filling and sealing of containers such as individual serving creamers and the like comprises first and second forming and shaping stations, a sealing station, a first conveyor means for advancing a first series of interconnected partially diecut container forming material through said first forming and shaping station to shape the material to form half containers; a second conveyor means for advancing a second series of interconnected partially cut container forming material through said second forming and shaping station to shape the material to form half containers; means for bringing the second series into opposed aligned relation with the first series and, in said first conveyor means to be advanced with said shaped first series, advancing the first conveyor means to pass the aligned opposed series through said sealing station to secure and form a liquid tight seal between the opposed half containers while leaving a filling inlet; means for cutting the series of forming material to free the partially sealed containers therefrom, means for orientating the partially sealed containers to position the filling inlets for top filling of the containers; a filling station for filling an orientated container with product through the filling inlet as the orientated container is advanced by said first conveyor means; a sealing station for collapsing the filling inlet and completing the seal of the filled container, and means for discharging the filled sealed container from said first conveyor means.

According to a seventh aspect of the invention a method of forming a container, filling the formed container and sealing the container comprises: advancing two strips of formable material through separate forming operations and shaping each strip to form a series of half containers each having a recess therein generally surrounded by a similarly sized flange; aligning the two strips in opposed relation abutting the flanges of opposed half containers in a manner to form a central cavity for receiving product by having the half containers of each of said strips received in a recessed plate of a horizontal conveyor; securing the opposed flanges substantially about the periphery thereof to form a container having a liquid tight seal between opposed flanges while leaving an unsealed area between opposed flanges for filling of the container; cutting each of the formed containers from the strip material and rotating said plates to appropriately orientate the containers with the unsealed area at a raised position; filling each formed container through the unsealed area; and subsequently sealing the remaining portion of the opposed flanges providing a liquid tight seal thereabout.

Preferably the half containers are held in the conveyor by commonly engaging the flanges of opposed half containers at a number of points about the periphery of the flanges and maintaining said engagement as the form containers are orientated for filling.

According to an eighth aspect of the invention a method of forming, filling and sealing a container made from opposed formable strip material, comprises advancing each strip material through a forming and shaping operation to form a portion of the container and provide a sealing area thereabout for abutment with a like sealing area of the other strip material; aligning each formed strip material in opposed relation to define the container with the sealing areas in abutment; advancing the aligned strip material through a sealing operation to effect a seal between said sealing areas and define a filling inlet through which product is introduced to the container; cutting the containers from the strip material; changing the orientation of the containers to position the filling outlet at an upper position in preparation for filling; advancing the container through a filling station and filling the container through the filling inlet with product and subsequently sealing the filling inlet to close the container.

According to a ninth aspect of the invention a disposable free-standing container for a small portion of a liquid comprises: first and second panel members in opposed, spaced apart facing relationship and a side wall means extending between said panel members; a cavity for storing liquid defined between said first and second panel members and said side wall means; at least one of said first and second panel members defining a support surface for free-standing disposition of said container; and a throat passage communicating with said cavity and positioned to be at a raised point when said container is disposed in such free-standing disposition.

Preferably said first and second panel members both define support surfaces capable of standing said container in free-standing disposition, said throat passage extending laterally of said side wall means in said free-standing disposition.

Desirably said cavity is shallow when said container is in said free-standing disposition, said cavity having a depth between said opposed first and second panels less than a third of the maximum laterla width of said cavity and a bias is created urging said container to said free-standing disposition.

The container may further include a peripheral flange member extending laterally outwardly of said side wall means, in said free standing disposition, said throat passage extending through said peripheral flange member.

Desirably said first panel and adjacent portions of said side wall means and peripheral flange member define a first portion of such container having a first configuration, and said second panel and adjacent portions of said side wall means and peripheral flange member define a second portion of such container having a second configuration, said second configuration being essentially a mirror image of said first configuration.

Said throat passage is preferably narrow and small relative to said cavity and thereby effectively limits accidental splashing of liquid during filling of said container and during opening of said container at said throat passage.

According to a tenth aspect of the invention a disposable container of fixed shape comprises: first and second container sections in opposed facing relationship defining a cavity for retaining a small portion of a liquid and a throat communicating with said cavity; said container sections defining at least one support surface for free-standing disposition of said container with said throat at a raised position relative to the at least one support surface in a free-standing disposition.

Each such container section may include only one support surface for disposition of said container in one of only two free-standing dispositions. Such container is desirably shaped to return to said free-standing disposition if tipped therefrom.

The container sections may include overlapping flanges extending outwardly of said cavity which limit the angle through which the container moves if inadvertently tipped. The container may include a peripheral ring-like member about said container and spaced from said support surface to act as a stop surface limiting the extent of inadvertent tipping of said container from the free-standing disposition. Each such container section may include a peripheral flange with said flanges being in opposed relation and secured to provide a sealed cavity between said sections, at least one of said flanges acting as said peripheral ring-like member.

Alternatively each container may have only two support surfaces for free-standing disposition of said container and each container section defines one of the said two support surfaces, said container sections being shaped to co-operate with both said support surfaces to bias said container to said free-standing disposition when inadvertently tipped therefrom. Preferably such container will assume said free-standing disposition when supported by a flat surface.

According to an eleventh aspect of the invention we provide a closed cavity for retaining a small liquid portion and a throat communication with said cavity, said container having a planar support area spaced relative to said throat for free-standing disposition of said container with a portion of said throat remote from said cavity at a raised spaced position relative to said support area in said free-standing disposition, said container being shaped to provide an inherent bias urging said container to return to said free-standing disposition if inadvertently tipped therefrom.

Such a container preferably includes a peripheral member extending generally horizontally about said cavity at a position spaced from said support surfaces to provide a stop surface limiting inadvertent tipping of said container from said free-standing disposition.

Such a container is conveniently generally horizontally split relative to said free-standing disposition and each section includes an outwardly extending peripheral flange at said split with said flanges being in opposed relation and sealed therebetween by a thermally activated adhesive. The peripheral member may be defined by at least one of the said flanges. Desirably said support area has at least associated therewith a labelling surface forming a major surface area of the container section. The support area may be a planar surface which also defines said labelling surface.

The container sections are desirably mirror images and said container is supportable in one of two free-standing dispositions with said container inherently biased to return to the particular free-standing disposition if inadvertently tipped therefrom.

According to a twelfth aspect of the invention a disposable free-standing container suitable for retaining liquids comprises: an upper portion of a first configuration and a lower portion of a second configuration, said second configuration being essentially a mirror image of said first cofiguration; said lower portion having a base panel defining a support surface for free-standing disposition of said container; a liquid retaining cavity defined between said upper and lower portions; and a filling and pouring throat portion communicating with said cavity and extending laterally of said container in said free-standing disposition at a position above said support surface; said portions cooperating to urge said container to said free-standing disposition when supported by a flat surface.

Such a container may further include a peripheral flange extending laterally outwardly of said container in said free-standing disposition, said throat portion comprising a narrow passage extending through said peripheral flange; said cavity being of a shallow depth, between said upper and lower portions, representing less than a third of the maximum lateral width of the cavity, in said free-standing disposition, said flange acting as a stop surface limiting inadvertent tipping of said container from said free-standing disposition.

According to a final aspect of the invention a disposable free-standing container comprises first and second container sections in opposed facing relationship which collectively define a cavity for retaining a small portion of a liquid, and a throat intermediate said container sections communicating with said cavity; said container sections each including a peripheral flange extending beyond said cavity with said flanges secured to at least substantially close said cavity; at least one of said container sections defining a support area for free-standing disposition of said container with said throat at a raised space position relative to said support area in such free-standing disposition; at least one of said flanges co-operating with said support area to act as a stop surface which limits the extent of inadvertent tipping of said container from said free-standing position.

Such a container is desirably shaped to create a gravity bias urging said container to return to said free-standing disposition when accidentally tipped therefrom.

Particular and preferred embodiments of the invention are further explained and illustrated by reference to the accompanying drawings, wherein:

FIGURE 1 is a partial schematic side elevation of a packaging machine in accordance with the invention;

FIGURE 2 is a partial perspective view of the strip material employed in the machine of Figure 1;

FIGURE 3 is a partial perspective view showing the strip material of Figure 2 after it has been shaped in the machine of Figure 1 to form a strip of container sections;

FIGURE 4 is a partial perspective view showing the registration of a pair of opposed strips of container sections of Figure 3;

FIGURE 5 is a partial perspective view showing the strip from Figure 4 after the first sealing operation and after a cutting operation to separate individual open containers;

FIGURE 6 shows the open containers of Figure 5 positioned for filling;

FIGURE 7 shows the containers of Figure 6 after they have been subjected to a heat sealing operation after a filling step;

FIGURE 8 is a cross-section through a conveyor plate and a forming station of the machine of Figure 1;

FIGURE 9 is a view similar to Figure 8 with the forming station in a position clear of the strip;

FIGURE 10 is a sectional view through a conveyor plate and first heat sealing station of the packaging machine of Figure 1;

FIGURE 11 is a view similar to Figure 10 with the pad of the heat sealing station in contact with the strip of registered container sections of Figure 4;

FIGURE 12 is a partial perspective view showing the conveyor plates used in the separating and orienting of the strip of container portions;

FIGURE 13 is a sectional view showing movement of the conveyor plates of Figure 12 of a filling orientation;

FIGURE 14 is a top view showing a mechanism for retaining the containers in the conveyor of the machine of Figure 1;

FIGURE 15 is a schematic elevation showing the sealing of the filled containers in the packaging machine of Figure 1;

FIGURE 16 is an end view of a filled container produced in the packaging machine of Figure 1; and

FIGURE 17 is a front view of the filled container of Figure 16.

With further reference to Figure 1 a packaging machine 2 includes a pair of forming stations 6a and 6b associated with respective conveyors (such as conveyor 16 shown for station 6b), a flange sealing station 14, a slitting or separating station 18, a filling station 22 and a throat sealing station 24. A conveyor 26 is associated with stations 18, 22 and 24. Slitting station 18 includes reciprocating slitters 20.

Machine 2 operates on diecut flat strip material 4 (shown as 4a and 4b in Figure 1), to produce strips 8 and 9 of container sections which are sealed to form a strip 15 of container portions, which are separated from strip 15 to form open individual containers 59 which, in turn, are filled and sealed to form filled containers 68.

With further reference to Figure 2 a diecut flat strip material 4 has a plurality of container blanks 40 and a diecut periphery 44. The blanks 40 are symmetrically disposed in pairs 47 with the adjacent pairs 47 being interconnected by connecting portions 46. A neck portion 48 joins blanks 40 within each pair 47. Notches 49 are associated with the neck portions 48.

An adhesive 42 is disposed on strip 4 adjacent periphery 44.

With further reference to Figure 3 there is shown a strip 8 of container sections 50 formed from strip 4 of Figure 2. Each container section 50 has an open container recess 54 and a peripheral flange 52; a flat panel 58 defines a floor of recess 54 and a side wall 60 extends from panel 58 to flange 52.

A neck inlet 56 is formed in neck portion 48 of Figure 2 and opens into or communicates with adjacent recesses 54.

The adhesive 42 is located on peripheral flange 52 and connection portions 46; and panel 58 defines a potential support and labelling surface for the finished container.

The inlet 56 is positioned generally adjacent the upper edge of side wall 60, remote from panel 58.

With further reference to Figure 4, the registration of opposed strips 8 and 10 of container sections 50 forms the strip 15 of container portions. Each container section 50 of a strip 8 is in opposed facing relationship with a like container section 50 of an opposed strip 10 to cooperate therewith and define strip 15. The opposed connecting portions 46 and opposed flanges 52 are secured by adhesive 42 with opposed inlets 56 defining throat portions 61, and each pair of opposed recesses 54 together forming a cavity 55 in communication with a throat portion 61.

With further reference to Figure 5, individual open, unfilled containers 59 are separated from strip 15 formed in Figure 4. Each container 59 has a throat 62 derived from a throat forming portion 61 of strip 15. Throat 62 is in a side wall 57 of container 59 formed by side walls 60 intermediate and spaced from opposed panels 58.

With further reference to Figure 6, throat 62 of container 59 is oriented for filling through a throat mouth 63, and subsequent sealing; throat mouth 63 is in direct fluid flow communication with cavity 55.

With further reference to Figure 7 the open containers 59 of Figure 6, have been filled and sealed to produce sealed containers 68 each having a melted bead 72 extending across throat 62 now partially collapsed.

As shown in the cut-away portion of one of the sealed containers 68, a liquid portion 70 is retained within cavity 55 and when the container 68 is disposed as shown in Figure 7, liquid portion 70 accumulates in a lower region of container 68. Thus when the container is open the likelihood of spillage of liquid portion 70 is reduced.

Thus in accordance with the invention the packaging machine 2, shown in Figure 1, shapes previously diecut flat strip material 4a and 4b by passing the same through the respective forming stations 6a and 6b. The forming stations 6a and 6b heat the strip material 4a and 4b after it has been registered in the respective conveyors such as 16 and therefore physically urge the material into the conveyor plates of conveyors such as 16 to create the strips 8 and 10 (see Figure 3). The formed strips 8 and 10 after passing through their separate forming stations 6a and 6b, are brought into opposed alignment (see Figure 4) at point 12 immediately upstream of the flange sealing station 14 and are so maintained by the conveyor plates of conveyor 16.

The conveyors such as 16 comprise linked plates having recesses therein for receiving in a registered manner the flat strip material 4a and 4b respectively. The recesses of the plates also define the final shape of the container sections 50 (see Figure 3), and are used in the forming thereof. The aligned strips 8 and 10, at point 12, are engaged and supported by the conveyor 16 and are advanced together by conveyor 16. The conveyors are of the intermittent movement type and the various operations, particularly the forming, are carried out while the conveyors are stationary.

The conveyor plates are shown in section in Figures 8 and 9 and the strips 8 and 10 are advanced with the conveyors respectively as the formed container sections 50 are nested therein. The cavities of the plates of conveyors 16a and 16b are similar to those of the conveyor 26, shown in detail in Figure 12 and, additionally, may be recessed to engage connecting portions 52 of the strip material 8 and 10 to assist in registration. Flange sealing station 14 operates on a length of the aligned strips 8 and 10 to form container portions disposed in series and seals the container sections 50 generally about the periphery 44 by thermally activating adhesive 42 between opposed flanges 52. The pre ferred hot melt adhesive is activated by applying heat to an upper flange 52 as the opposed container sections 50 are held stationary at the sealing station 24. Care must be exercised as the activation temperature of the hot melt adhesive 42 is normally only about 16°C to 28°C below the softening point of the thermoformable material. Too much heat will cause adhesion of the flange 52 to the heating members of station 14 and the flange 52 would not fulfill its intended function essentially as an inert separator between such heating member and the hot melt adhesive 42. Styrene, a suitable packaging material generally softens or starts to become active at about 148°C and therefore the rate of heat transfer to the flanges is important to avoid the flanges 52 reaching a temperature resulting in adhesion of the flanges 52 to the heating member of station 14. The heat members on heads are preferably coated with Teflon (Trade Mark for polytetrafluoroethylene) or like material to reduce adhesion problems.

The strip 15 of container portions is then advanced across a transition zone 21 downstream of the flange sealing station 14 and upstream of the conveyor 26.

The conveyor 26 has rotatable plates to cause unfilled containers 59 (see Figure 5) to rotate for the filling and final sealing operations (see Figures 6 and 7). The first station associated with conveyor 26 is the slitting station 18 which includes the reciprocating slitters 20. During the conveyor dwell time, the slitters 20 cut the individual containers 59 from the strip 15 and thus allow the containers 59 during the next advancement of the conveyor 26 to rotate as generally shown at position 27. Once the containers 59 are rotated, product is introduced through throat mouth 63 (see Figure 6), while the containers 59 are stationary at the filling station 22. After the filling station 22, the throat sealing station 24 closes the container 59, whereafter the sealed containers 68 (see Figure 7) are finally discharged at 28 for bulk packaging. The discharged containers 68 from conveyor 26 are suitably collected at collection point 30. An automatic bulk packaging arrangement can be used in conjunction with and controlled by the packaging machine 2.

Suitably the flat strip material 4a and 4b has a suitable non-toxic. food safe adhesive 42 at least about the periphery of the blank 40. The adhesive 42 is preferably previously printed or other wise applied, on the strips 4a and 4b of packaging material and thus the strips 4a and 4b used in machine 2 have been previously coated with the adhesive 42. It should also be noted that the adhesive need not be restricted to peripheral areas of blanks 40 and in some cases can entirely cover one surface of the blanks 40.

The notches 49 are also previously formed by die cutting and are used to assist in opening the containers 68 and are preferably about 9.5 mm from the sealing end of the throat 62, i.e., from sealed bead 72 (see Figure 7). The die cut outer periphery 44 of the flat strip 4 is used to cooperate with the conveyor plates to assure proper registration of the container blanks 40 in the conveyor plates, particularly of the conveyors 16.

The melted bead 72 (see Figure 7) extends across the throat 62 and serves to assist the adhesive 42 in maintaining the throat 62 closed. Since the throat 62 is partially collapsed by the sealing operation at station 24, the seal of the throat area is somewhat more difficult. By melting the edges of the opposed container sections 50 in this area, the possibility of release of the adhesive 42 and leakage of the product is reduced.

The flat strip 4 can be pre-printed such that the flat panels 58 act as labelling surfaces and include a pre-printed label thereon. The thermoforming operation of station 6 will not significantly affect the print on this location as it is merely being displaced within the recess of the conveyor plate of conveyor 16 and most extrusion of the strip 4 in the thermoforming occurs in the sidewall 60.

The panels 58 act as support surfaces for the container 68 whether open or closed and when supported on one of these surfaces the throat 62 extends laterally from the container cavity 55, and is at a raised position relative to the support surface. In this position any residual product in an opened container is maintained within the container cavity 55 to the extent that the product is below the level of the throat mouth 63. Thus panels 58 are used to support the container in one of two free-standing dispositions. In this free-standing disposition as generally illustrated in Figure 5 (for the unfilled containers 59), the container 68 due to its inherent shape and shallow depth is not prone to tipping and even if inadvertently tipped, gravity serves to create a bias which will force the container 68 back to the free-standing disposition. The peripheral flange 52 also cooperates with the panels 58 to act as a stop surface limiting the extent of the inadvertent tipping of the container 68 due to the flange 52 coming into contact with the supporting surface. Thus the container 68 has an inherent bias urging it to one of two free-standing dispositions and in either disposition the throat 62 is at a raised point relative to the support surface defined by a panel 58. The peripheral flange 52 as it extends about the container 68 limits the angle through which the container 68 can be tipped and gravity acting on the container 68 forces the container 68 to return to the free-standing disposition. The shallow profile of the container 68 is also less prone to being accidentally tipped by the user.

The formed containers 68 are elongated and of shallow depth with the depth of the cavity 55 being less than one-third of the maximum width; thus the recesses 50 have a depth less than one-sixth of the maximum width. The cavity volume in the case of creamers is preferably about 18.5 cc and the filled quantity of creamers is normally about 15 cc or less. The panels 58, which each act as a support surface and a labelling surface, could be modified and the entire panel 58 need not be part of the support surface. For example, support feet could be formed in the container 68 about the periphery of the panel 58 which collectively define a support surface similar to 58 in that .the container would continue to have the inherent bias to assume the free-standing disposition on a planar surface.

The container 68 is less prone to tipping, and even if inadvertently tipped returns to the free-standing disposition. The container 68 if tipped may not result in the spilling of product, as the throat 62 may not be displaced to a position which would result in the product leaving the container 68. The container 68 is also more convenient to fill due to its generally closed container cavity 55 with product being introduced through a filling tube inserted in the throat 62.

A further advantage of the container 68 is the labelling area defined by the panels 58 and the manner in which one of these panels is always presented at the top of the container when the container is in its free-standing disposition. Such is not the case with the prior art creamer cups where labelling is restricted to the lid area.

Figure 8 shows a detail of the forming station 6 which includes conveyor plates 80 having vacuum ports 82 for drawing the plastic in contact therewith. Forming pad 84 is shaped according to the final shape of the container 68 and includes a heating face 86. In order to protect the preferred thermally activated adhesive 42, the forming pad 84 also includes a flange protecting portion 88, which has a fluid cooling jacket 90. Thus, when the heating face 86 of pad 84 is brought into contact with the plastic strip 4, the flange area adjacent edge 44 is cooled by the cooling jacket 90 or at least maintained at a temperature below the activation of the adhesive 42. The forming pad 84 is mounted on shaft 94 which is slidably received in cylinder portion 96. A spring bias 92 is provided between the pad 84 and cylinder portion 96 to assist the forming of the container sections 50. The pad 84, when it first comes into contact with the strip 4 does not bottom out within the recess of the conveyor plate 80 due to compression of the spring bias 92 and the pad will initially heat the strip 4 and as the material of strip 4 softens, the pad 84 will move within the conveyor plate 80 in accordance with the spring bias 92 and the strength of the softened strip 4. From the above it can be appreciated it is preferable to restrict the adhesive 42 to the flange area adjacent edge 44, thus simplifying the forming operation and reducing contamination of the heating face 86.

The movement of the strip 4 within the conveyor plate 80 is assisted by a vacuum box 100 which has been brought into engagement with a lower surface of the conveyor plate 80. A vacuum force effectively draws the strip 4 against the interior surface of the conveyor plate 80. Each plate 80 includes in a lower surface thereof, vacuum ports 82. The vacuum box 100 is pneumatically actuated by actuator 102 and moves in timed sequence with the conveyor 16 into and out of contact with the plates 80 and similarly the forming pad 84 is reciprocated via a pneumatic actuator 98.

The extreme positions of the reciprocating movement of the forming pad 84 are shown in Figures 8 and 9 where the pad 84 has been fully withdrawn in Figure 9 and the pad 84 is fully inserted in Figure 8. In Figure 9, the conveyor 16 has been advanced to bring a new portion of strip 4 within the forming station 6. The vertical reciprocating motion of the pad 84 is indicated by arrow 106. Note that the forming station 6 (6a and 6b in Figure 1) includes two pairs of forming pads 84 and only one set of these pads 84 has been shown in Figure 8. In effect, the forming station 6 forms four container sections 50 for each cycle of the conveyor 16 and Figure 8 only shows formation of two container sections 50. The forming operation is the most time consuming operation and therefore pairing of the forming pads 84 allows the overall packaging machine 2 to operate at a higher output. Typically, the cycle of the machine when four containers are formed per line is about 2.4 seconds, of which the stationary time is 1.8 seconds. Thus, each index of the conveyor results in the advancement of four containers.

Details of one of the sealing heads 110 of the sealing station 14 are shown in Figures 10 and 11. Interior to the sealing head 110 is a water cooled central member 112 which slides within an outer housing 114 of the head 110. The water cooled central member 112 is hollow and water is circulated through the cavity via water inlet 118 and water outlet 120. The central member 112 is shaped to lie in intimate contact with the upper surface of the container sections 50 to essentially limit the heat of sealing to the overlapping flange area or at least protect the rest of the container sections 50 from damaging heat. The outer housing 114 includes heated surfaces 116 which contact an upper face of the aligned flanges 52 and heat the same. This heat is conducted through the upper face to activate the adhesive 42 between the opposed flanges 52 of the container sections 50 and effect sealing of the container sections 50. Pressure is exerted between the sealing head 110 and the supporting conveyor plate; and the central member 112 is spring-biased as indicated by spring 122 such that the central member 112 initially contacts the container sections 50, and further movement of the sealing head 110 will bring the heated surfaces 116 into contact with the upper face of the aligned flanges 52. This spring biasing arrangement also ensures that the heated surfaces 116 are first to release contact from the resulting strip 15 of container portions.

The water cooled central member 112 is secured at one end of the piston-like rod 124 and the outer housing 114 is movable on the rod 124. The piston-like rod 124 telescopes within the sleeve 126 and the sealing head 110 is reciprocated to effect initiation and removal of the sealing head 110 from the strip 15 of container portions. As the central member 112 bottoms out against the container sections 50, the spring 122 is compressed as indicated in Figure 11 and the outer housing 114 is driven into contact with the flanges 52 due to contact of the sleeve 126 with the upper surface 128 of housing 114. Therefore, as the sealing head 110 is brought into contact with the container sections 50, the central member 112 initially bottoms out against an upper container section 50 and subsequent movement of the sealing head 110 will cause compression of the spring 122 and eventual contact of the heated surfaces 116 with the flanges 52 of the container sections 50. As sleeve 126 is initially removed from the resulting strip 15, the heated surfaces 116 will move therewith due to the action of the spring 122 while the central member 112 remains in contact to further ensure that the integrity of the container sections 50 in strip 15 is maintained. Thus, this sealing head 110 serves to isolate the heat of the sealing head 110 to the periphery of the container sections 50, and the water cooled central member 112 protects areas of the container sections 50 which are not to be raised to this higher temperature. This heat removal also serves to set the adhesive 42 more quickly.

The sealing head 110 of Figures 10 and 11 is only one such head for sealing of the flanges 52 of opposed container sections 50, however, the sealing station 14 would more especially include a second set of heads 110 to complete sealing of opposed container sections 50 to form four containers disposed in series in strip 15 along the length of the conveyor. Thus, each opposed pair of container sections 50 is paired within a conveyor plate and each operation is effected on a pair of conveyor plates. Therefore, each operation is being carried out on a series of container portions four in length and any number of series of container sections can be disposed across the machine 2. Power is introduced to the heated surfaces 116 through the electrical connections 117.

Conveyor plates 140 of the conveyor 26, are shown in Figure 12 and include a central member 142 secured to the chain drive and are of a generally 'I' shape. Extending in a longitudinal axis of the member 142 is a slitter guide 143 to effect separation of the throat portions 61 to provide the throats 62 of a pair of containers 59. Secured to the central member 142, to one side, is the trailing pivotal plate 144 and, to the opposite side, a leading pivotal plate 146 is secured. These plates 144 and 146 pivot relative to the central member 142. Pins 148 are secured to the respective plates 144 and 146 and are rotatably received by central member 142.

A cam actuator 152 is secured to one of pins 148 of the leading plate 146 and a cam actuator 150 is secured to one of pins 148 of the trailing conveyor plate 144. Cam actuator 152 cooperates with a stationary cam 156 and cam actuator 150 cocperates with a stationary cam 154. The cam actuators 150 and 152 control the position of the movable plates 144 and 146 and will cause the formed, open containers to move to the generally vertical orientation shown in Figures 13 and 14 for carrying out the filling operation. Two different cams are used, 154 and 156, due to the opposite rotation that each of plates 144 and 146 must undergo. Note that the conveyor plates 144 and 146 rotate intermediate the space between the chain drive.

Prior to rotating of the plates 144 and 146 to a generally vertical orientation, a container retaining arm 160 moves across the upper surface of a container 59 to retain the container 59 within the recess of the pivotal plate supporting it (144 or 146). The container retaining arms are pivotally secured within the respective pivotal plates and pass through the plates where an actuator 162 is located on the lower surface of such plates for controlling the position of the arms 160.

The pivotal plates 144 and 146 have been rotated in Figure 13 and the containers 59 received in the plates 144 and 146 are aligned beneath a filling tube 170 of the filling station 22 when the conveyor 26 is brought to rest. Thus, the throat 62 of a container 59 is aligned and in registry with a filling tube 170 whereafter the filling head may be lowered such that the filling tube 170 is inserted into the throat 62 to commence filling of the container 59.

The movement of the pivotal plates 144 and 146 and the mechanism for actuating the retaining arms 160 have been described with respect to various cam mechanisms and it can be appreciated that other arrangements are also possible. In particular, the retaining arms 160 could be biased to one position and only require forced movement in one direction, or the arms 160 could be free moving and as such, full control over the actuators 162 would be necessary. Therefore, the embodiments as shown in Figures 12 and 13 can be modified and, in particular, the actuators 150 and 152 may be controlled along the entire length of conveyor 26 as opposed to merely contacting various cam members as indicated in Figure 12.

In order to maintain registration, the conveyors 16 (i.e., 16a and 16b) and 26 are advanced in timed sequence.

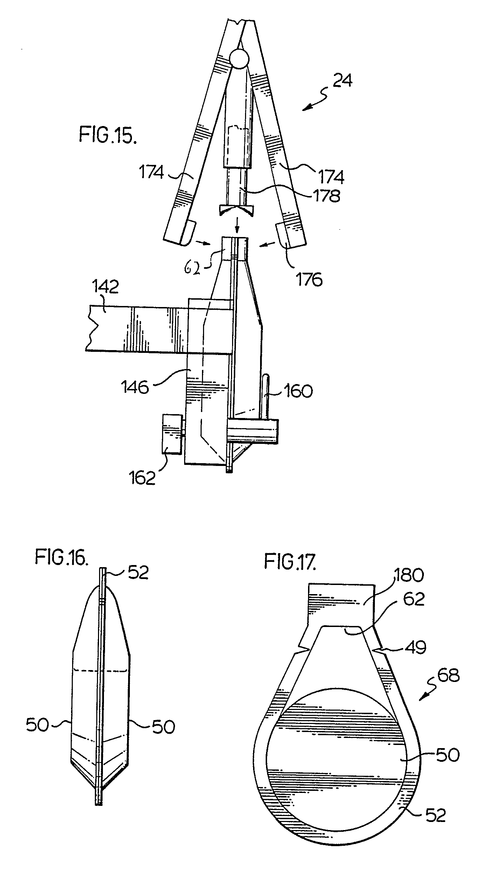

Sealing of the open, filled containers 59 occurs at the station 24 and one such sealing operation is generally shown in Figure 15. A pair of pinch arms 174 move down over a portion of the throat 62 of the container 59 and are actuated, deforming the throat 62 to flatten a portion thereof. Heat is then applied to both sides of the flattened portion to activate the adhesive 42 located on this portion of the container 59 and to soften the previously shaped plastic to reduce the required adhesive force. Each pinch arm 174 includes a heated pad 176. After the throat 62 has been deformed, a melting bar 178 is preferably brought into engagement with the top of the deformed throat, the purpose of the bar 178 being to melt the plastic and provide a generally round bead 72 at the end of the throat 62 to ensure a complete seal thereof. Sealing of this throat region is somewhat more difficult in that it has been deformed to define the throat and the strength inherent in this deformation must be overcome. This area is more difficult to seal and the melted bead 72 at the top ensures that the throat 62 is fully sealed. Melting of the plastic has been described as one approach to avoid the possibility of "leakers", however, it may not be required in all cases. In some cases, it may be preferable to heat the plastic material in the throat 62 to flatten and reshape the same, whereby sealing is easier. Therefore, other arrangements are possible including merely relying on the strength of the adhesive 42.

The sealed container 68 is generally shown in Figures 16 and 17 and the product level within the container is generally indicated in the end view of Figure 16. The teardrop shaped container 68 can be bulk packed in a random orientation and is not prone to leakage. The container 68, when used, is orientated in generally an upright condition and the throat 62 of the container is opened, for example, by breaking at throat 62, assisted by notches 49. As can be appreciated, the liquid product is essentially retained within a lower region central cavity 55 (as generally illustrated in Figures 7 and 16), and the person opening the container 68 is deforming the container 68 in the throat region and product is retained in the container cavity 55. Therefore, the likelihood of spilling any of the contents of the container 68 is greatly reduced. Tearing of the throat region will result in some pinching of the throat 62, thus further reducing the likelihood of any contents of the container 68 being inadvertently discharged.

The narrowness of throat 62 also avoids or minimizes splashing of the liquid product during the filling of the open containers 59.

Thus in a particular embodiment as illustrated in the drawings the container 68 has first and second container sections in opposed facing relationship defining a cavity for retaining a small portion of liquid, and a throat intermediate the container sections communicates with the cavity. The container sections define at least one, and usually two, support surfaces for free-standing disposition of the container with the throat at a raised position in such free-standing disposition, i.e., a position spaced above the supporting surface. More especially the container sections have first and second configurations, the second configuration being a mirror image of the first and vice versa; and each section has a panel member, which members are in opposed, spaced apart facing relationship with a side wall extending from each panel and terminating in a peripheral flange portion, which flange portions are secured together to form a peripheral flange of the container intermediate the panels. When the container is in a free-standing disposition, standing on one of the panels, the flange cooperates with such panel to act as a stop member limiting the extent of any inadvertent tipping of the container from the free-standing disposition.

Both panels represent planar, potential support surfaces for the container, spaced from the throat, the throat being in a raised position relative to the support surface in the free-standing disposition. In this way the container is shaped to provide an inherent bias urging the container to return to free-standing disposition if inadvertently tipped therefrom.

Although various preferred embodiments of the present invention have been described herein in detail, it will be appreciated by those skilled in the art, that variations may be made thereto without departing from the spirit of the invention or the scope of the appended claims.

## Claims

1. A disposable container of predetermined shape suitable for retaining liquids comprising two opposed container sections, each having a peripheral flange about a recess with said flanges being secured and sealed therebetween, said recesses collectively defining a common central cavity of said container and said flanges including a throat opening into said cavity, said throat being at least partially defined by said opposed flanges and passing therebetween, each container section being of a similar thermoformable plastic material

2. A container as claimed in claim 1, wherein said throat is sealed at an end thereof remote from said cavity and said container retains a liquid product therewithin.

3. A container as claimed in claim 1 or claim 2, wherein said container sections are at least essentially identical and each includes a pair of flat generally circular label areas, in opposed spaced apart relationship defining opposite sides of said central cavity and being generally parallel with said opposed flanges, said label areas additionally defining support surfaces for free-standing disposition of said container.

4. A strip of packaging material having diecut side edges and including individual container body sections joined by neck portions, said strip comprising a plastic thermoformable sheet which on one side thereof includes a thermally activated suitable adhesive at least essentially about the perimeter of each container body section.

5. A strip of thermoformed plastic container sections joined in series, each container section having a flat generally planar peripheral flange area surrounding an outer edge of a wide generally central recess opening, said flange being interrupted by a sunken neck portion which connects with a neck portion of an adjacent container section; each flange including hot melt adhesive on an outwardly facing flange area.

6. A method of forming a plastic container of fixed shape comprising: intermittently advancing two flat strips of plastic thermoformable material through separate thermoforming operations; shaping each strip in a thermoforming operation to form a series of connected half containers in a strip, with each half container having a recess therein generally surrounded by a flange and a necked area across said flange accessing the recess, said flange including a thermally activated adhesive thereon; cooling said flange about each half container during the thermoforming operation to an extent sufficient to essentially maintain said hot melt adhesive on said flanges unactivated during the thermoforming operation; aligning said strips of half containers in an opposed manner to create a series of container portions, each container portion being defined by a pair of aligned half containers in which the respective recesses collectively define a common central cavity with the respective aligned neck areas defining a narrow throat for filling of the cavity; sealing said aligned strips of half containers by applying sufficient heat to activate the adhesive on said flanges while maintaining the narrow throat open and maintaining said flanges below their thermal activation temperature during a dwell time between advances of said strips to thereby form a strip of said container portions; retaining each container portion within a conveyor for separating and filling; separating individual containers from the strip of container portions and filling the individual containers with a fluid-like product during the dwell time; sealing the throat of each filled container; releasing the retained sealed containers; and removing the sealed containers from the conveyor.

7. A method as claimed in claim 6, wherein the individual containers are separated by cutting and are rotated in preparation for said filling to orientate each container so that the throat is in a position above the central cavity.

8. A packaging machine for the forming, filling and sealing of a container comprising: two separate forming conveyors each advancing thermoformable plastic strip material through separate forming operations; means for bringing the output of one of said forming conveyors into appropriate registration at a registration point and in timed sequence with the output of the other of said forming conveyors, such that the outputs define opposed container sections produced during the thermoforming operations; container sealing means for sealing the strips of container sections to provide a strip of container portions, each container portion having a throat portion; a further conveyor for receiving the sealed strip of container portions, said further conveyor having means to engage each container portion and retain the same in a conveyor plate; separating, filling and sealing stations associated with said further conveyor for first separating said container portions from said strips as discrete containers open at said throat portion, filling said discrete containers and sealing said filled containers; and means associated with said further conveyor for discharging the sealed filled containers.

9. Apparatus for the forming, filling and sealing of containers such as individual serving creamers and the like comprising first and second forming and shaping stations, a sealing station, a first conveyor means for advancing a first series of interconnected partially diecut container forming material through said first forming and shaping station to shape the material to form half containers; a second conveyor means for advancing a second series of interconnected partially cut container forming material through said second forming and shaping station to shape the material to form half containers; means for bringing the second series into opposed aligned relation with the first series and, in said first conveyor means to be advanced with said shaped first series, advancing the first conveyor means to pass the aligned opposed series through said sealing station to secure and form a liquid tight seal between the opposed half containers while leaving a filling inlet; means for cutting the series of forming material to free the partially sealed containers therefrom, means for orientating the partially sealed containers to position the filling inlets for top filling of the containers; a filling station for filling an orientated container with product through the filling inlet as the orientated container is advanced by said first conveyor means; a sealing station for collapsing the filling inlet and completing the seal of the filled container, and means for discharging the filled sealed container from said first conveyor means.

10. A method of forming a container, filling the formed container and sealing the container comprising: advancing two strips of formable material through separate forming operations and shaping each strip to form a series of half containers each having a recess therein generally surrounded by a similarly sized flange; aligning the two strips in opposed relation abutting the flanges of opposed half containers in a manner to form a central cavity for receiving product by having the half containers of each of said strips received in a recessed plate of a horizontal conveyor; securing the opposed flanges substantially about the periphery thereof to form a container having a liquid tight seal between opposed flanges while leaving an unsealed area between opposed flanges for filling of the container; cutting each of the formed containers from the strip material and rotating said plates to appropriately orientate the containers with the unsealed area at a raised position; filling each formed container through the unsealed area; and subsequently sealing the remaining portion of the opposed flanges providing a liquid tight seal thereabout.

11. A method of forming, filling and sealing a container made from opposed formable strip material, comprising advancing each strip material through a forming and shaping operation to form a portion of the container and provide a sealing area thereabout for abutment with a like sealing area of the other strip material; aligning each formed strip material in opposed relation to define the container with the sealing areas in abutment; advancing the aligned strip material through a sealing operation to effect a seal between said sealing areas and define a filling inlet through which product is introduced to the container; cutting the containers from the strip material; changing the orientation of the containers to position the filling outlet at an upper position in preparation for filling; advancing the container through a filling station and filling the container through the filling inlet with product and subsequently sealing the filling inlet to close the container.

12. A disposable free-standing container for a small portion of a liquid comprising: first and second panel members in opposed, spaced apart facing relationship and a side wall means extending between said panel members; a cavity for storing liquid defined between said first and second panel members and said side wall means; at least one of said first and second panel members defining a support surface for free-standing disposition of said container; and a throat passage communicating with said cavity and positioned to be at a raised point when said container is disposed in such free-standing disposition.

13. A container according to claim 12, where said first and second panel members both define support surfaces capable of standing said container in free-standing disposition, said throat passage extending laterally of said side wall means in said free-standing disposition.

14. A disposable container of fixed shape comprising: first and second container sections in opposed facing relationship defining a cavity for retaining a small portion of a liquid and a throat communicating with said cavity; said container sections defining at least one support surface for free-standing disposition of said container with said throat at a raised position relative to the at least one support surface in a free-standing disposition.

15. A disposable container defining a generally closed cavity for retaining a small liquid portion and a throat communication with said cavity, said container having a planar support area spaced relative to said container with a portion of said throat remote from said cavity at a raised spaced position relative to said support area in said free-standing disposition, said container being shaped to provide an inherent bias urging said container to return to said free-standing disposition if inadvertently tipped therefrom.

16. A disposable free-standing container suitable for retaining liquids comprising: an upper portion of a first configuration and a lower portion of a second configuration, said second configuration being essentially a mirror image of said first configuration; said lower portion having a base panel defining a support surface for free-standing disposition of said container; a liquid retaining cavity defined between said upper and lower portions; and a filling and pouring throat portion communicating with said cavity and extending laterally of said container in said free-standing disposition at a position above said support surface; said portions co-operating to urge said container to said free-standing disposition when supported by a flat surface.

17. A disposable free-standing container comprising first and second container sections in opposed facing relationship which collectively define a cavity for retaining a small portion of a liquid, and a throat intermediate said container sections communicating with said cavity; said container sections each including a peripheral flange extending beyond said cavity with said flanges secured to at least substantially close said cavity; at least one of said container sections defining a support area for free-standing disposition of said container with said throat at a raised spaced position relative to said support area in such free-standing disposition; at least one of said flanges co-operating with said support area to act as a stop surface which limits the extent of inadvertent tipping of said container from said free-standing position.

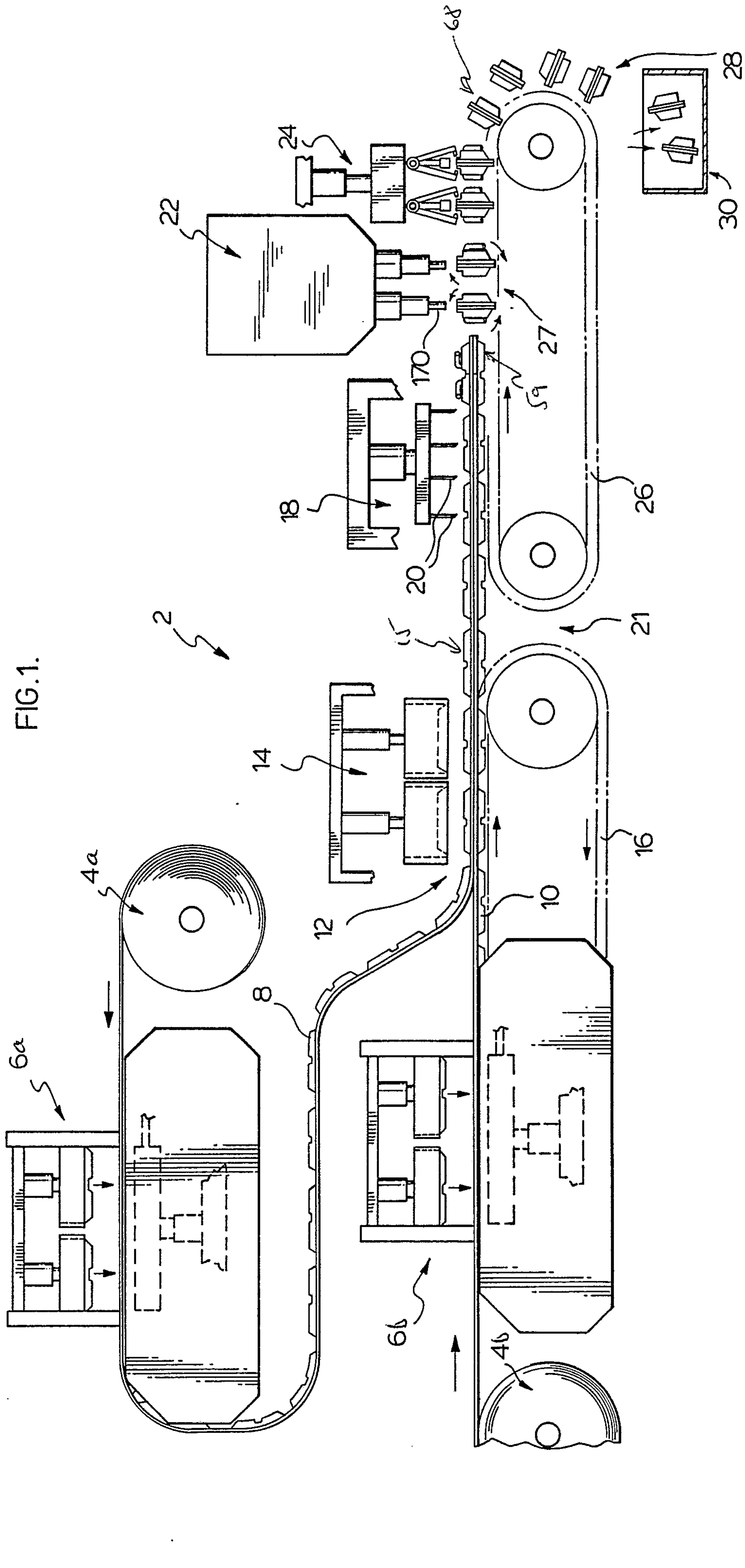


FIG.1.

FIG.2.

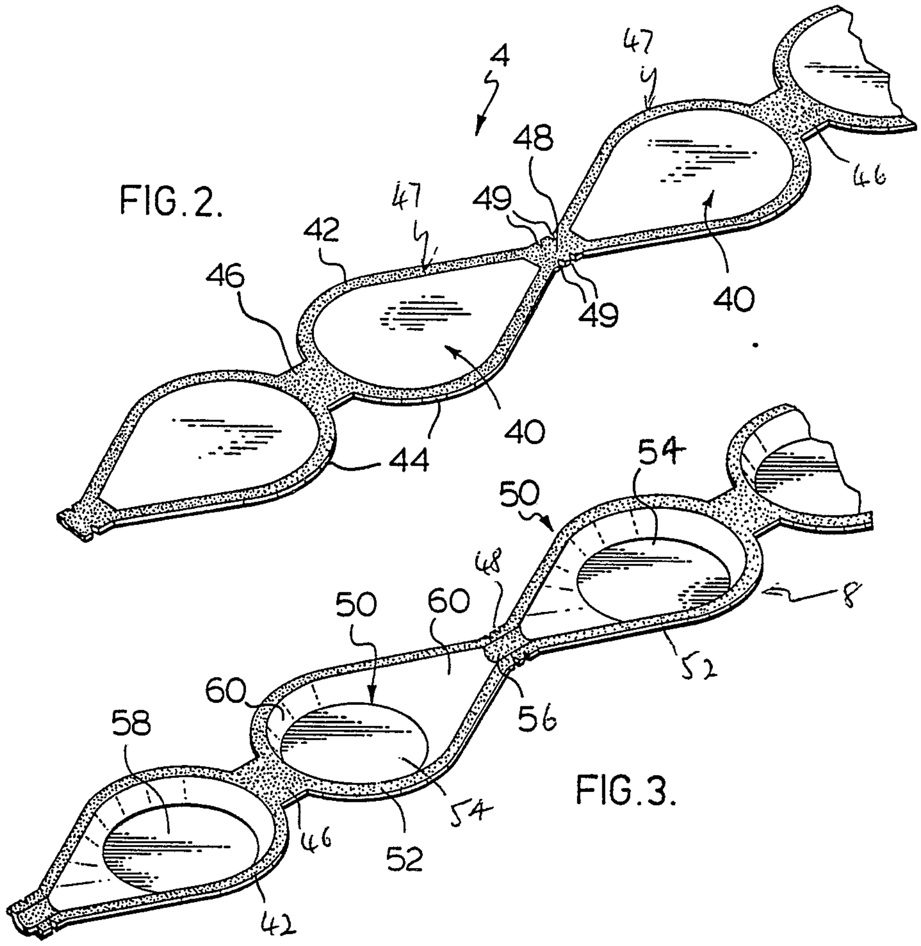


FIG.3.

FIG.4.

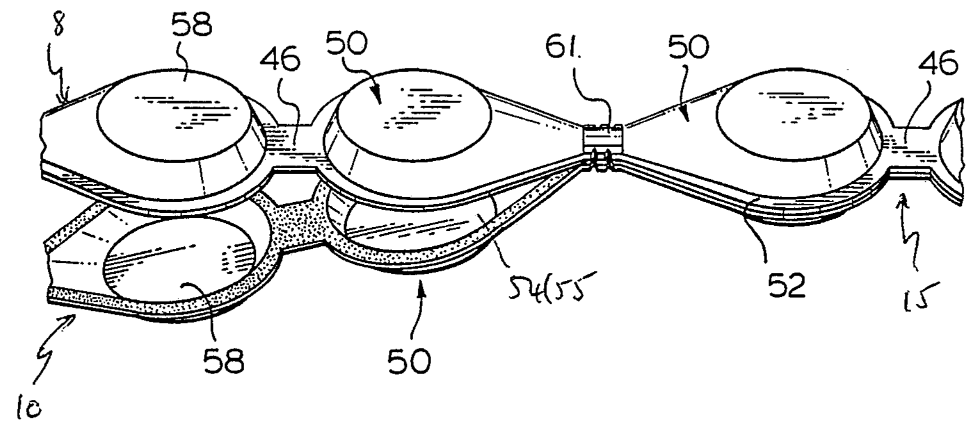

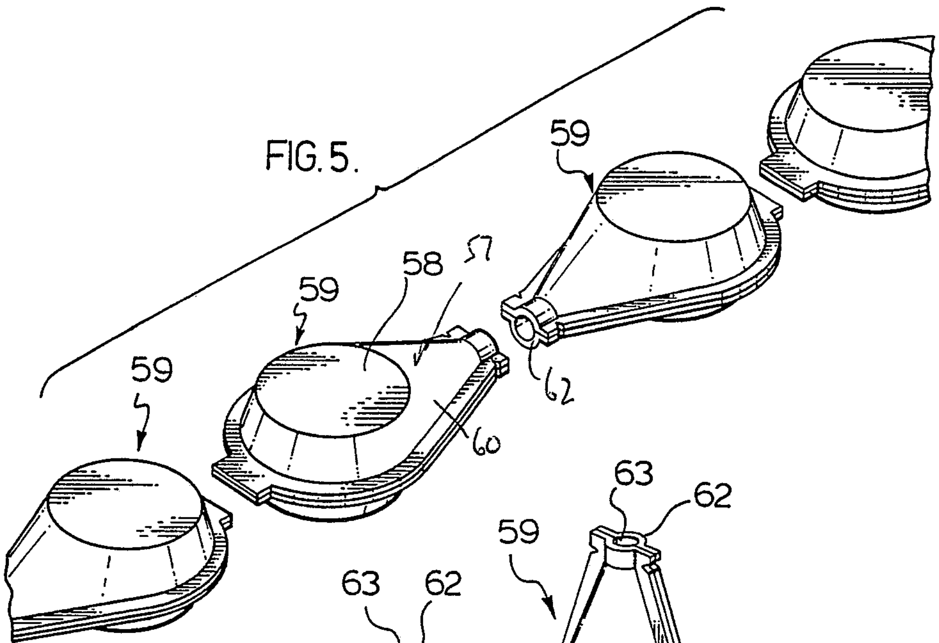


FIG. 5.

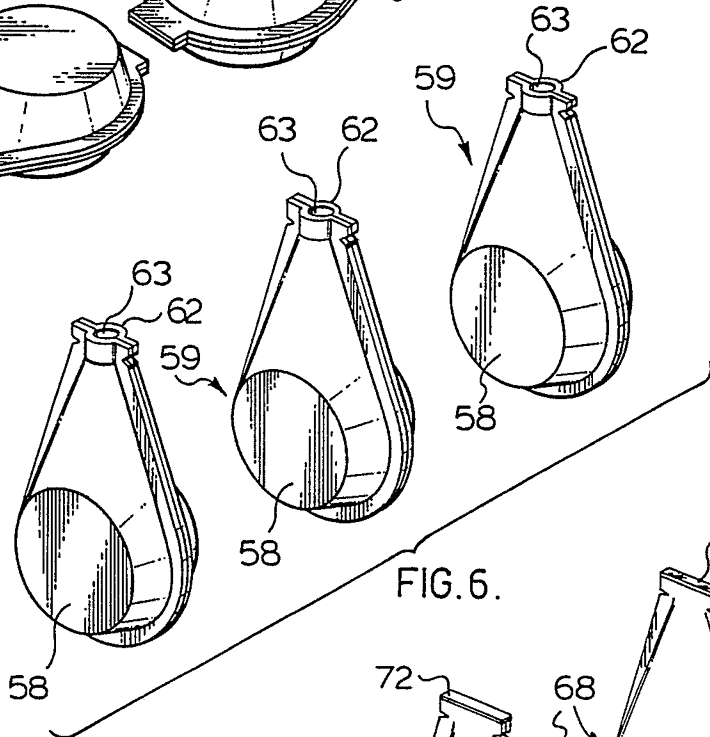


FIG. 6.

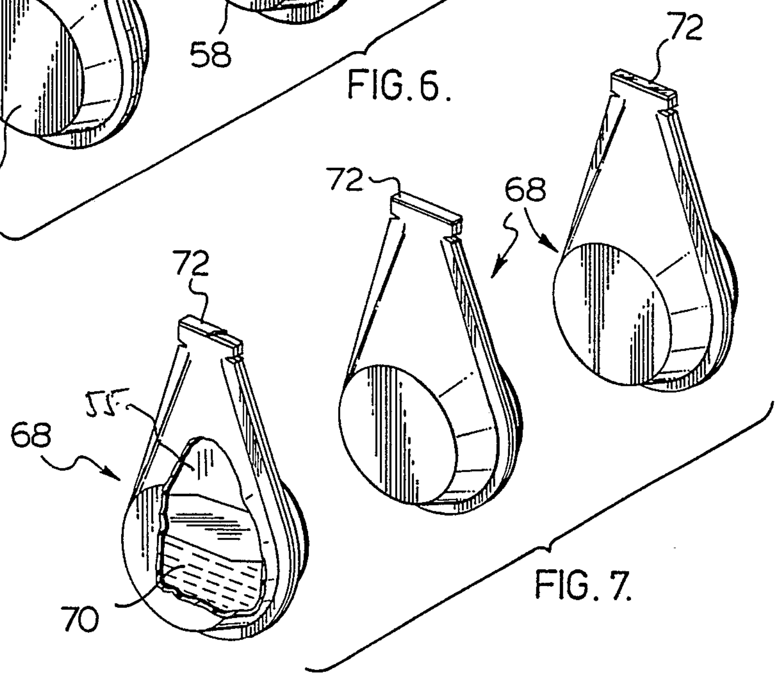


FIG. 7.

FIG.9.

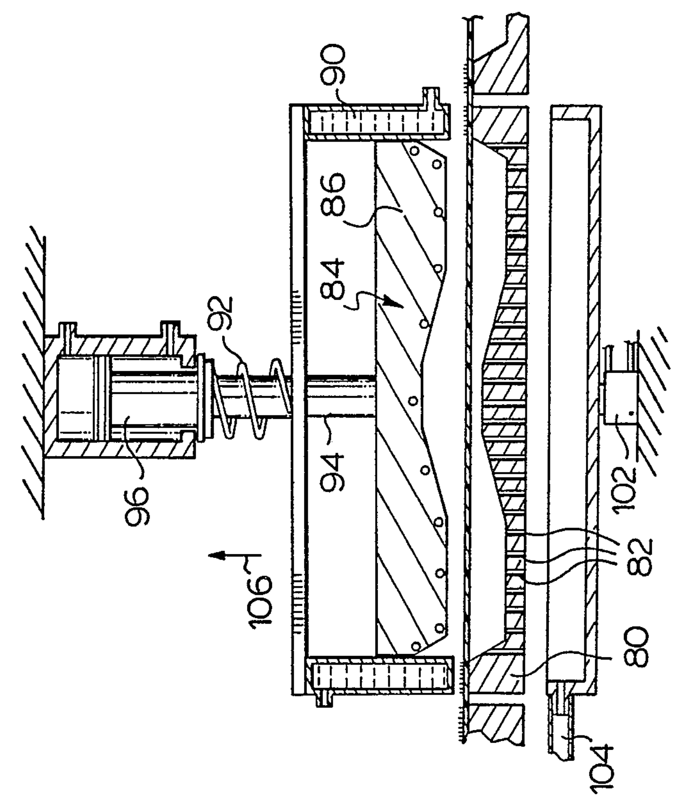
90
86
84
92
94
96
106
102
82
80
104

FIG.8.

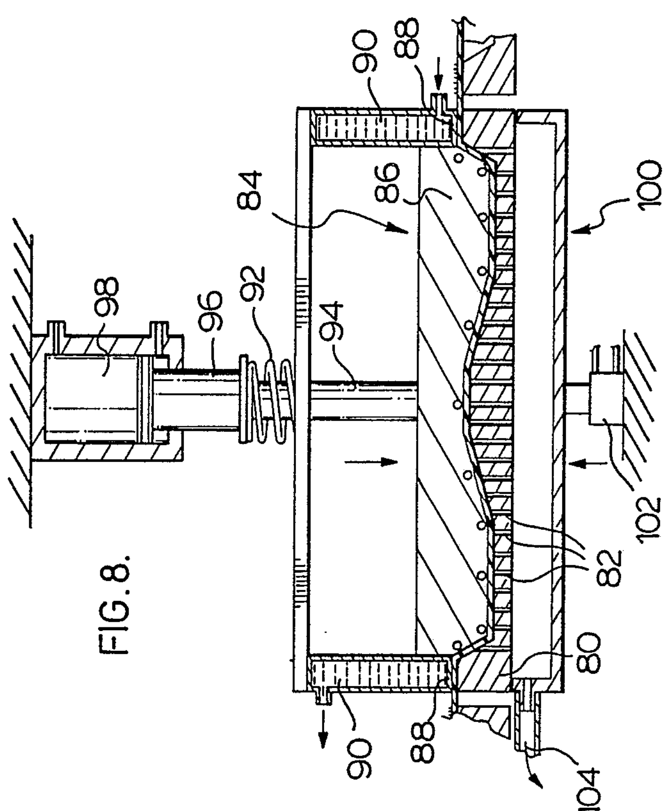
98
96
92
94
84
86
90
88
100
102
82
80
104

FIG.10.

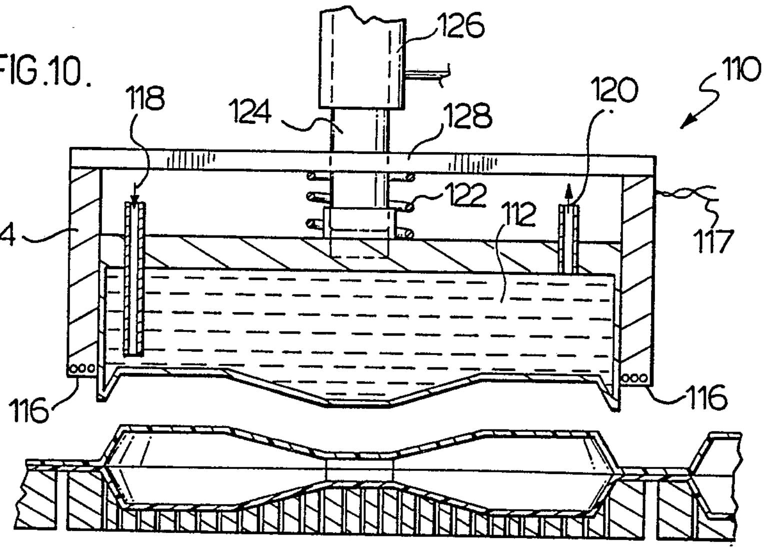
126
110
118
124
128
120
122
114
112
117
116
116

FIG.11.

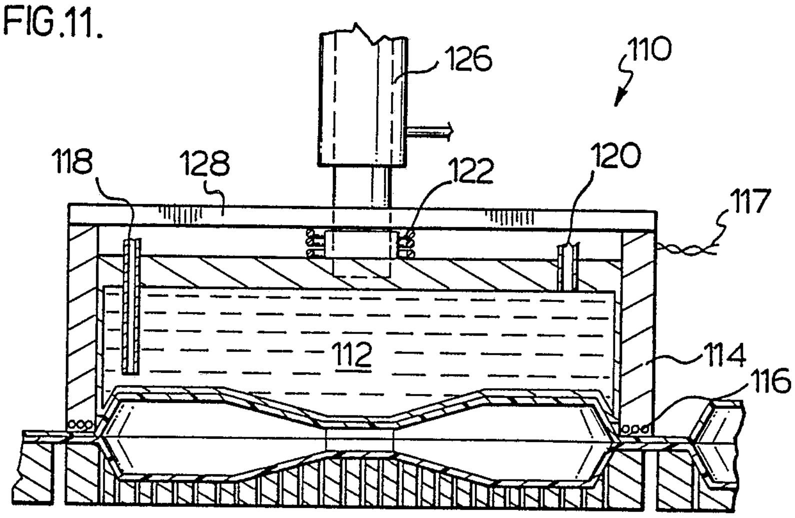
126
110
118
128
122
120
117
112
114
116

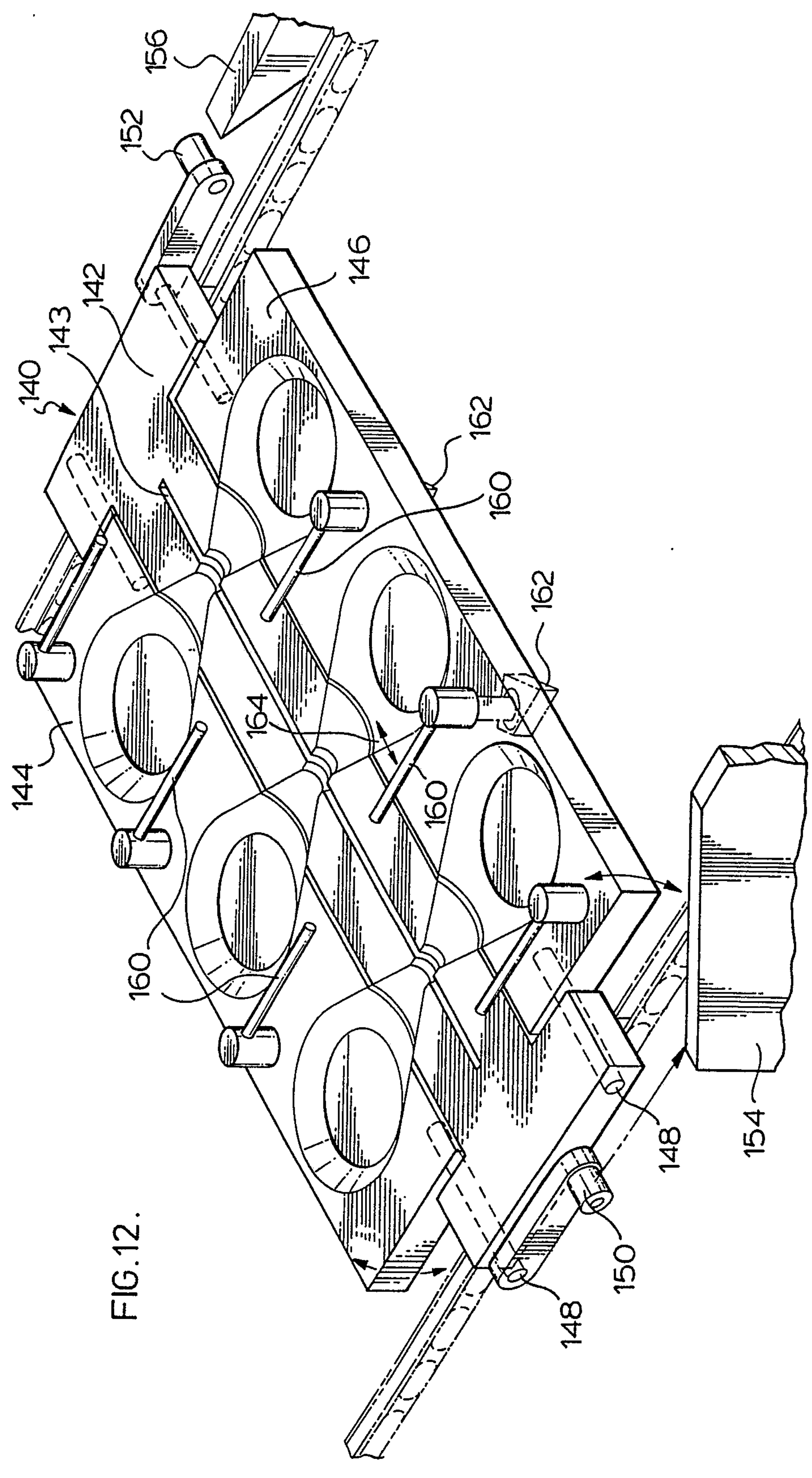


FIG.12.

FIG.13.

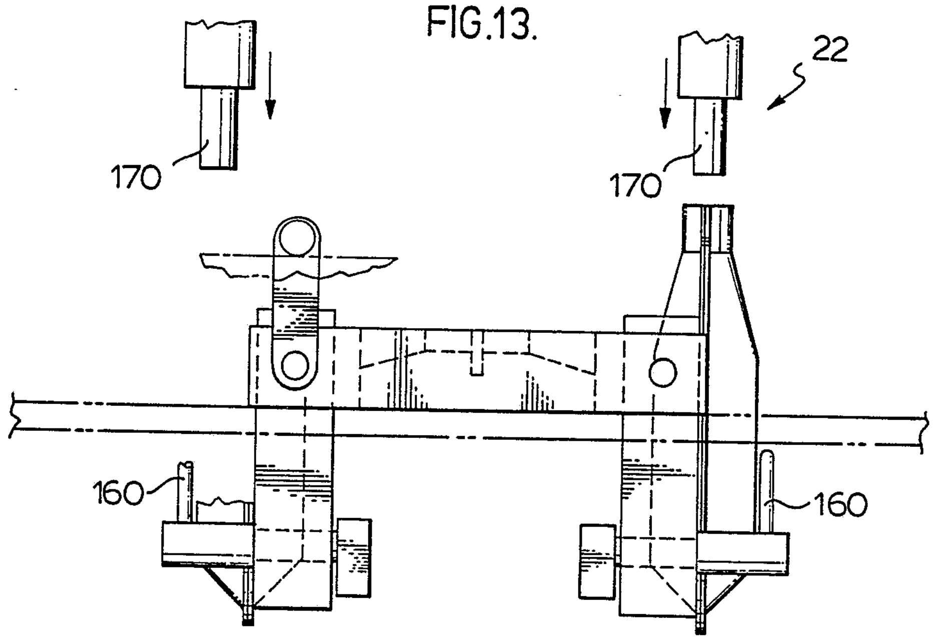


FIG.14.

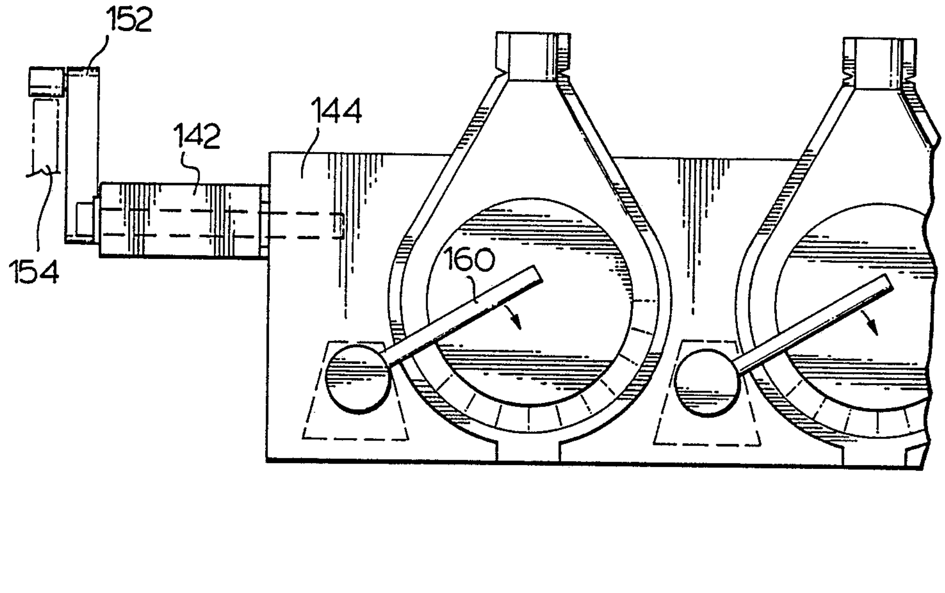

FIG.15.

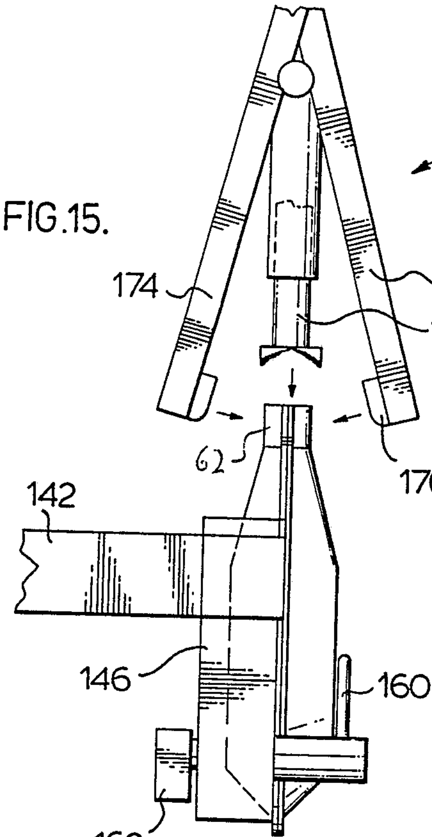


FIG.16.

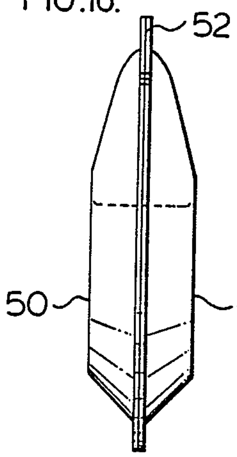


FIG.17.